# FASCICULE DE BREVET EUROPEEN

(11) **EP 0 366 513 B1**
(45) Date de publication et mention de la délivrance du brevet: **27.07.1994**
(21) Numéro de dépôt: 89402754.9
(22) Date de dépôt: 05.10.1989
(51) Int. Cl.: H01R 13/405, G06K 7/06

(54) **Connecteur électrique pour cartes à mémoire électronique, procédé de réalisation d'un tel connecteur et dispositif de lecture-écriture intégrant un tel connecteur**
Elektrischer Verbinder für elektronische Gedächtniskarten, Verfahren der Verwirklichung eines derartigen Verbinders und Lese-Schreibvorrichtung mit diesem Verbinder
Electrical connector for electronic memory cards, process for producing such a connector and read-write device incorporating such a connector

(30) Priorité: 26.10.1988 FR 8813988
(43) Date de publication de la demande: 02.05.1990
(73) Titulaire: ITT COMPOSANTS ET INSTRUMENTS, F-92220 Bagneux (FR)
(72) Inventeur: Juret, Bernard, F-39100 Dole (FR); Jannière, Alain, F-75004 Paris (FR)
(74) Mandataire: Kohn, Philippe

(56) Documents cités:
- EP-A- 0 105 083
- DE-C- 3 612 576
- DE-U- 8 529 580
- FR-A- 2 607 291

## Description

La présente invention concerne un connecteur électrique pour cartes à mémoire électronique, un dispositif de lecture-écriture comportant un tel connecteur, ainsi qu'un procédé de réalisation de ce connecteur électrique.

Le document FR-A-2 607 291 décrit et représente un connecteur électrique pour cartes à mémoire électronique du type comportant sur une de ses faces principales une pluralité de plages de contact électrique alignées parallèlement à la direction d'introduction de la carte dans un dispositif de lecture-écriture et un bord transversal antérieur perpendiculaire à la direction d'introduction, le connecteur comportant :
- un cadre support réalisé par moulage présentant une première et une deuxième faces planes parallèles et une pluralité de conducteurs électriques en forme de lames élastiquement déformables s'étendant parallèlement à la direction d'introduction, chaque lame de contact comprenant une première extrémité libre incurvée de contact avec l'une des plages de la carte et faisant saillie hors du plan de ladite première face, une portion médiane de liaison de la lame au support et une seconde extrémité libre de raccordement de la lame à un circuit de traitement du dispositif de lecture-écriture, chaque lame de contact s'étendant parallèlement à la direction d'introduction ; et
- un micro-contact électrique de détection de la position de la carte du type comportant une lame de détection élastiquement déformable comprenant une première extrémité libre de coopération mécanique avec le bord transversal antérieur de la carte, une portion médiane de liaison de la lame au support et une seconde extrémité libre de raccordement de la lame de détection au circuit de traitement, la lame de détection s'étendant sensiblement perpendiculairement à la direction d'introduction de la carte, et un conducteur électrique de sortie dont une portion coopère électriquement avec une portion en vis-à-vis de la lame de détection.

On constate aisément que la réalisation en grande série d'un tel connecteur est peu aisée et coûteuse dans la mesure où elle nécessite des opérations de montage et d'assemblage sur le support de composants constitutifs du micro-contact de détection. De plus il existe un risque de défaut de coopération entre le bord antérieur de la carte et la lame de détection, la carte étant susceptible de passer au-dessus, ou au-dessous, de la lame de détection lors de son introduction.

Afin de remédier à ces inconvénients, l'invention propose un connecteur du type mentionné plus haut caractérisé en ce que :
- le conducteur électrique de sortie est une lame de sortie élastiquement déformable comprenant une première extrémité libre qui coopère électriquement avec ladite première extrémité libre de la lame de détection, une portion médiane de liaison de la lame de sortie au support et une seconde extrémité libre de raccordement au circuit de traitement, la lame de sortie s'étendant sensiblement perpendiculairement à la direction d'introduction de la carte ;
- et en ce que lesdites portions médianes de liaison des lames de contact, de la lame de détection et de la lame de sortie sont surmoulées par le matériau constitutif du support lors de l'opération de moulage de ce dernier.

Selon d'autres caractéristiques de l'invention :
- les portions médianes de la lame de détection et de la lame de sortie peuvent être disposées chacune respectivement de part et d'autre des portions médianes des lames de contact ;
- la portion médiane de liaison de la lame de détection s'étend dans le corps du support selon une direction sensiblement parallèle auxdites faces planes puis se prolonge par une zone repliée à 90° qui fait saillie hors de ladite première face, la zone repliée étant reliée à un des deux bords de la portion médiane de liaison parallèles à la direction d'introduction de la carte, la première zone repliée étant prolongée par la partie principale de la lame de détection qui s'étend perpendiculairement à la direction d'introduction de la carte et dans un plan perpendiculaire au plan de la première face et au plan de la zone repliée ;
- la portion médiane de liaison de la lame de sortie s'étend dans le corps du support selon une direction sensiblement parallèle aux faces planes puis se prolonge par une zone repliée à 90° qui fait saillie hors de ladite première face, la zone repliée étant reliée à un des deux bords de la portion médiane de liaison parallèles à la direction d'introduction de la carte, la première zone repliée étant prolongée par la partie principale de la lame de sortie qui s'étend perpendiculairement à la direction d'introduction de la carte et dans un plan perpendiculaire au plan de la première face et au plan de la zone repliée ;
- l'extrémité libre de la lame de détection possède une partie cambrée dont la convexité est tournée en direction du bord transversal antérieur de la carte et qui se prolonge par une patte d'extrémité sensiblement parallèle à la direction générale de la lame de détection, cette patte étant agencée en vis-à-vis d'une partie cambrée formée à l'extrémité libre de la lame de sortie et dont la concavité est tournée vers le bord antérieur de la carte ;
- la convexité de la partie cambrée de la lame de sortie est en appui élastique contre la face de la patte qui est tournée en direction du bord antérieur de la carte de façon à ce que cette dernière provoque l'ouverture du micro-contact lorsqu'elle est en position de lecture-écriture ;
- la lame de détection comporte une zone élargie agencée en regard du bord antérieur de la carte, et prévue dans la partie cambrée de la lame de détection ; et
- le support comporte un évidement dans lequel peut se déplacer l'extrémité transversale correspondante de la zone élargie.

L'invention propose également un dispositif de lecture-écriture pour cartes à mémoire électronique du type comprenant :
- un boîtier d'introduction de la carte du type comportant au moins une première pièce, et
- un connecteur électrique selon l'invention,
- ladite première pièce étant prévue pour être montée sur ladite première face du support du connecteur électrique avec lequel elle coopère pour définir une fente d'introduction de la carte, caractérisé en ce que la face interne de la première pièce tournée vers les extrémités libres de contact des lames de contact possède, en section transversale un profil de came de guidage de la carte lors de son mouvement d'introduction dans le dispositif de lecture-écriture.

Selon d'autres caractéristiques :
- le profil de la came est un profil en forme de V ; et
- le connecteur électrique comporte au moins deux ensembles de lames conductrices, les lames de deux ensembles adjacents étant parallèles entre elles, et les deux lames correspondantes de deux ensembles différents étant alignées, le sommet du profil de came en forme de V étant disposé au droit de la zone intermédiaire entre les extrémités libres de contact en vis-à-vis des lames élastiques appartenant à deux ensembles différents.

L'invention propose également un procédé de réalisation d'un connecteur électrique conforme aux enseignements qui précèdent, caractérisé en ce qu'il comporte les étapes suivantes :
a) découpe partielle dans une bande de tôle conductrice des lames de contact, de la lame de détection et de la lame de sortie qui s'étendent parallèlement les unes aux autres et de manière à ce qu'elles soient toutes reliées entre elles par au moins une bande transversale reliée à leurs secondes extrémités de raccordement,
b1) cambrage des extrémités libres incurvées des lames de contact et des parties cambrées de la lame de détection et de la lame de sortie,
c) surmoulage du cadre support autour des portions médianes de liaison des lames de contact, de détection et de sortie.

Selon d'autres caractéristiques du procédé :
- l'étape "b1" de cambrage est suivie d'une étape "b2" de pliage à 90° de la zone pliée des lames de détection et de sortie ;
- l'étape de surmoulage est suivie d'une étape "d" de pliage des parties principales des lames de détection et de sortie de manière à ce qu'elles s'étendent dans une direction sensiblement parallèle au bord transversal antérieur de la carte ;
- l'étape "d" de pliage consiste à plier d'abord la lame de détection puis la lame de sortie ;
- l'étape "d" de pliage est suivie d'une étape "e" de cambrage final des lames de contact de manière à ce que les extrémités incurvées de contact fassent saillie hors du plan de la première face du support ; et
- le procédé comporte une étape de découpe de la bande transversale de liaison entre les différentes lames élastiques déformables qui est effectuée au moins postérieurement à l'étape "c" de surmoulage.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective d'un connecteur électrique réalisé conformément aux enseignements de l'invention ainsi que de la première pièce du dispositif de lecture écriture ;
- la figure 2 est une vue de dessus, à échelle agrandie, de la partie du connecteur de la figure 1 dans laquelle est agencé le micro-contact de détection ;
- la figure 3 est une vue de détail suivant la flèche F de la figure 2 ;
- la figure 4 est une vue de détail en section selon la ligne 4-4 de la figure 2 ;
- la figure 5 est une vue similaire à celle de la figure 2 représentant la partie supérieure de cette dernière et illustrant les deux positions fermée et ouverte du micro-contact de détection ;
- la figure 6 est une vue en section transversale d'un dispositif de lecture-écriture réalisé conformément aux enseignements de l'invention et incorporant un connecteur du type de celui représenté aux figures 1 à 5 ;
- la figure 7 est une vue schématique simplifiée d'une bande de tôle conductrice de l'électricité dans laquelle on a réalisé la première opération de découpe conformément au procédé selon l'invention ;
- la figure 8 est une vue similaire à celle de la figure 7 représentant l'état des différentes lames élastiques après une autre opération de découpe puis de cambrage de certaines portions de la bande de tôle ;
- la figure 9 est une vue en section selon la ligne 9-9 de la figure 8 ;
- la figure 10 est une vue en section selon la ligne 10-10 de la figure 8 ;
- la figure 11 est une vue de dessus illustrant une étape suivante du procédé à l'issue de l'opération de surmoulage du cadre support sur les portions médianes de liaison des lames élastiquement déformables ;
- la figure 12 est une vue partielle en section selon la ligne 12-12 de la figure 11 ;
- la figure 13 est une vue partielle en section selon la ligne 13-13 de la figure 11 ;
- la figure 14 est une vue similaire à celle de la figure 12 représentant le profil des lames conductrices de contact après l'opération finale de cambrage ;
- la figure 15 est une vue schématique partielle similaire à celle de la figure 14 illustrant la seconde extrémité libre de la lame de contact après l'opération de découpe de la bande de liaison ;
- la figure 16 est une vue similaire à celle de la figure 15 illustrant un premier mode de cambrage de la seconde extrémité libre de la lame de contact ;
- la figure 17 est une vue similaire à celle de la figure 16 illustrant un seconde mode de cambrage de la seconde extrémité libre de la lame de contact ; et
- la figure 18 est une vue d'une variante de réalisation d'un détail du support .

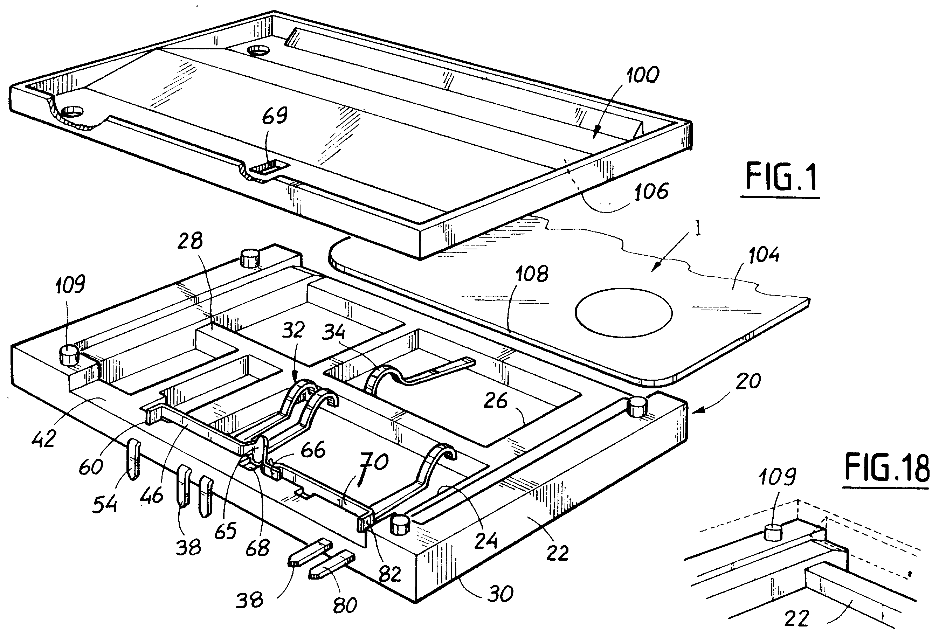

Le connecteur électrique 20 représenté aux figures 1 à 5 comprend un cadre support 22 de forme générale rectangulaire et qui est réalisé par moulage d'une matière plastique. Le cadre comprend principalement deux ouvertures rectangulaires 24 et 26 qui traversent le cadre depuis sa première face supérieure 28 jusqu'à sa seconde face plane parallèle inférieure 30.

Dans chacune des ouvertures, ou évidements, 24 et 26, font saillie hors de la face supérieure plane 28 les premières extrémités libres incurvées 32 de conducteurs électriques en forme de lames élastiquement déformables 34 qui s'étendent parallèlement à la direction d'introduction I d'une carte à mémoire électronique 104.

D'une manière connue en soi, et comme cela est notamment décrit et représenté dans le document FR-A-2 607 291, chacune des ouvertures 24, 26 rassemble deux groupes de quatre lames de contact adjacentes qui, en combinaison avec les quatres lames alignées de l'évidement opposé forment un premier élément de connecteur de raccordement à une carte à mémoire, l'autre groupe de quatre lames formant avec les quatre lames alignées et opposées un second élément de connecteur, ceci afin de s'adapter aux deux types de cartes existants selon les normes AFNOR et ISO.

Les lames de deux évidements 24 et 26 appartenant à un même ensemble de raccordement sont alignées deux à deux et disposées tête bêche.

Chaque lame de contact 34 comporte une partie principale 36 qui relie la première extrémité libre incurvée 32 à la seconde extrémité libre 38 qui permet le raccordement électrique à un circuit de traitement (non représenté).

La seconde extrémité libre 38 est reliée à la partie principale 36 par une portion médiane de liaison 40 sur laquelle est surmoulé le matériau constitutif du cadre support 22 lors de la réalisation du connecteur.

La partie principale 36 de chacune des lames élastiques, qui sont réalisées en tôle métallique conductrice, présente une largeur allant en s'amincissant depuis la portion 40 vers l'extrémité libre 32 de façon à pouvoir exercer un effort élastique de contact, selon une direction sensiblement perpendiculaire au plan du connecteur, qui soit particulièrement élevée et pouvant atteindre par exemple 1,5 Newtons par point de contact sur la carte à mémoire.

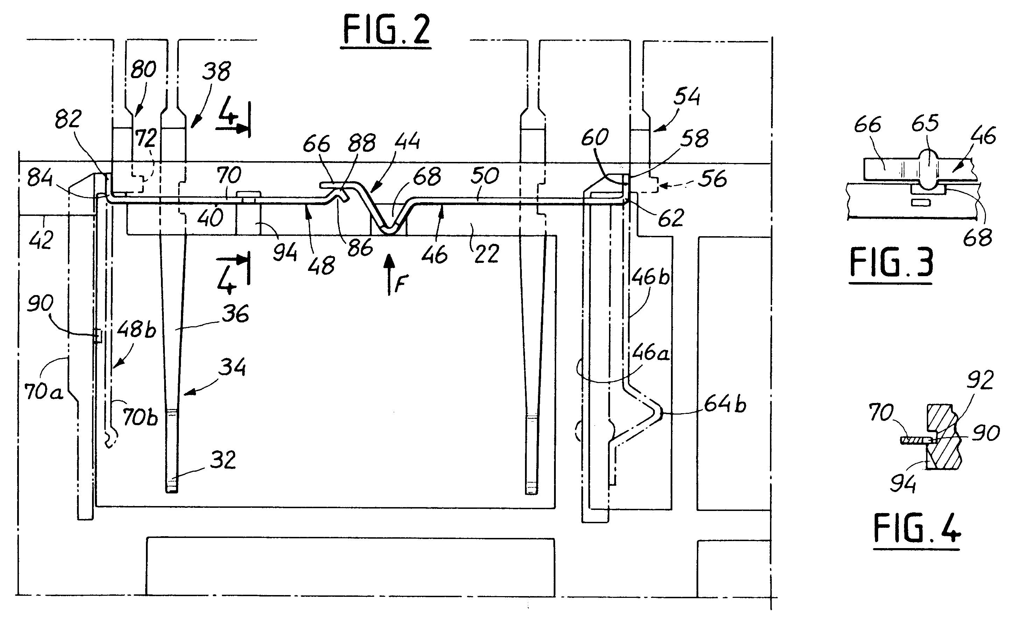

Comme on peut le voir à la figure 2, le cadre support 22 comporte des surfaces de butée 42 qui délimitent la position maximale d'enfoncement de la carte 104 en coopération avec le bord transversal antérieur 108 de cette dernière.

Comme cela est mentionné dans le document EP-A-0 139 593, il est nécessaire de prévoir un micro-contact de détection de la position enfoncée de la carte avant que le dispositif de lecture-écriture correspondant ne commence à traiter les informations contenues dans la carte.

Conformément à l'invention, le dispositif de micro-contact 44 comprend deux lames élastiquement déformables 46 et 48. La lame 46 est une lame de détection qui coopère électriquement avec la lame 48 qui est une lame dite de sortie.

La lame de détection 46 est une lame métallique élastiquement déformable réalisée dans le même matériau que celui des lames de contact 34 et dont la partie principale 50 s'étend selon une direction sensiblement perpendiculaire à la direction d'introduction I. Le plan de la partie principale 50 est également perpendiculaire à la face supérieure plane 28 du cadre support 22.

La partie principale 50 relie une première extrémité libre 52 à une seconde extrémité libre de raccordement 54 au moyen d'une portion médiane de liaison 56 similaire aux portions correspondantes 40 des lames de contact 34.

A partir de l'un des bords latéraux 58 de la portion médiane 56, la lame de détection 46 comporte une zone 60 repliée à 90° s'étendant perpendiculairement au plan de la face supérieure du support 22 de manière à faire saillie hors de ce plan vers le haut. La partie principale 50 est reliée à la zone repliée 60 par un coude à 90° 62 de façon à ce que la partie principale 50 s'étende selon la direction représentée aux figures.

Comme on le verra plus loin, le profil global de la lame de détection 46 est réalisé par deux opérations successives de pliage à partir de la position initiale représentée en traits mixtes 46a puis de la position intermédiaire également représentée en traits mixtes 46b.

La première extrémité libre 52 de la lame de détection 46 comprend une zone cambrée 64 dont la convexité est tournée en direction du bord antérieur de la carte de manière à venir coopérer mécaniquement avec celui-ci lors de l'introduction de la carte.

La zone cambrée 64 se prolonge vers l'extrémité libre par une patte d'extrémité 66 parallèle à la partie principale 50 qui est prévue pour coopérer électriquement avec l'extrémité libre de la lame de sortie 48.

Comme on peut le constater à la figure 3, la partie cambrée 64 comporte une zone élargie 65 dont la largeur est supérieure à la largeur moyenne de la lame élastique de détection 46 de façon à présenter une hauteur plus grande en regard du bord antérieur 108 de la carte avec lequel doit coopérer la zone 64 et éviter que la carte ne risque de passer au-dessus ou au-dessous, en considérant la figure 3, de la lame de détection 46.

Afin de permettre le débattement de la lame de détection 46, il est prévu un évidement correspondant 68 dans le support 22, et bien entendu un évidement 69 dans la partie de boîtier en vis-à-vis du dispositif de lecture-écriture, représentée à la figure 1.

La lame de sortie 48 possède un profil et une structure similaire à celle de la lame de détection 46 et sa partie principale 70 est notamment reliée au circuit de traitement par une portion médiane de liaison 72, une seconde extrémité libre 80, une zone repliée 82 et un coude 84 similaire aux éléments correspondants 56, 54, 60 et 62.

De la même manière on a représenté les deux positions initiales et intermédiaires 70a et 70b de la lame de sortie 70 avant les deux opérations de pliage.

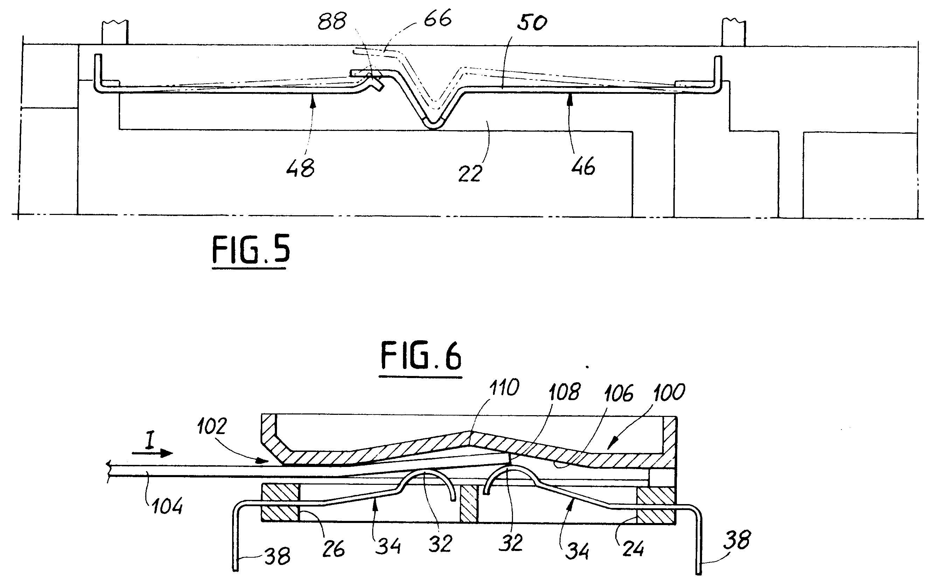

La première extrémité libre 86 de la lame de sortie 48 comporte une partie cambrée 88 dont la concavité est tournée vers le bord antérieur 108 de la carte et dont la convexité est en appui élastique sur la patte d'extrémité 66 de la lame de détection 46 de façon à ce que le micro-contact 44 soit ouvert lorsque la carte est en position enfoncée comme cela est représenté à la figure 5.

La partie principale 70 de la lame de sortie 48 comporte également un ergot latéral de guidage 90 qui est reçu dans une encoche 92 du support 22 pour limiter les débattement de la lame de sortie afin d'assurer une bonne fiabilité de la course d'ouverture du micro-contact 44. Le support 22 comporte également une rampe 94 facilitant l'introduction de l'ergot 90 dans l'encoche 92 lors du pliage final de la lame de sortie 48.

On a représenté à la figure 18 une variante de réalisation du support 22 dont le bord latéral tourné vers l'ouverture d'introduction est en retrait de manière à ce que la largeur "hors-tout" du support dépasse au-delà des extrémités de raccordement des lames. Le support est modifié de la même manière sur son autre bord latéral opposé de manière à englober également les extrémités de raccordement de l'autre groupe de lames.

Le connecteur électrique qui vient d'être décrit peut être utilisé dans différents dispositifs de lecture-écriture. Quelle que soit la structure générale du boîtier constitutif de ce dispositif, il comporte habituellement au moins une première pièce supérieure de boîtier 100 qui est rapportée sur la face supérieure 28 du support 22 du connecteur 20 de manière à définir avec ce dernier une fente d'introduction 102 de la carte 104 comme cela est représenté à la figure 6. L'indexation en position et la fixation de la pièce supérieure de boîtier 100 sur le support 22 peuvent être assurées par différents moyens et par exemple par sertissage à chaud, ou par ultrasons, sur les tétons 109 qui font saillie à la partie supérieure du support 22.

Dans les dispositifs connus, la face interne 106 de la pièce supérieure de boîtier 100 qui fait face aux extrémités libres incurvées 32 des lames de contact 34 est généralement plane et parallèle à la face supérieure 28 du support 22.

Afin d'éviter une usure trop rapide des portions incurvées de contacts 32 des lames 34, du fait d'une part de la venue en butée du bord antérieur 108 de la carte 104 et d'autre part des pressions de contact élevées nécessaires à une bonne qualité et une bonne fiabilité de contact, la face interne 106 possède un profil de came en forme de V, renversé si l'on considère la section transversale de la figure 6.

Le sommet 108 du V se situe au droit de la zone séparant les extrémités libres incurvées 32 des groupes de lames opposées et cet agencement permet un phénomène d'accompagnement du mouvement d'introduction de la carte 104 de façon à ce qu'elle passe, dans un premier temps, pratiquement au-dessus des extrémités libres incurvées 32 des lames de contact de gauche, en considérant la figure 6, puis qu'elle vienne progressivement appuyer sur les extrémités incurvées 32 des deux groupes de lames lorsque son bord antérieur 108 attaque la seconde branche, à droite, du profil de came en forme de V.

On décrira maintenant un procédé de réalisation selon l'invention du connecteur électrique 20 en se reportant notamment aux figures 1 à 4 et 7 à 17.

Le procédé selon l'invention permet de réaliser pratiquement en continu une production en bande de connecteurs électriques 20.

Lors d'une première opération de découpe dans une bande de tôle conductrice 200, on réalise, à l'aide d'outils classiques de découpe, l'ensemble des lames élastiquement déformables de contact 34 ainsi que, simultanément, les lames de détection 46 et de sortie 48.

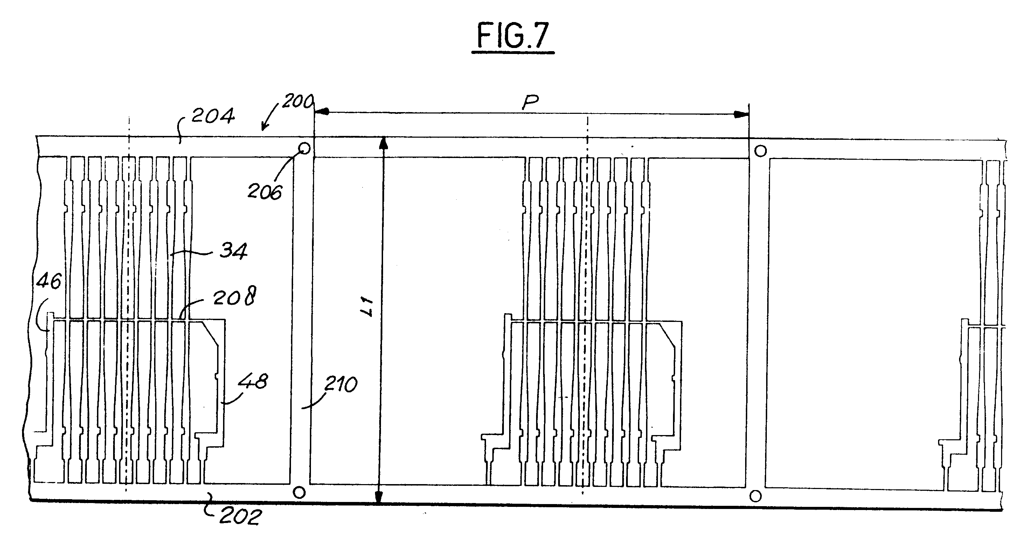

Comme on peut le voir à la figure 7, on réalise successivement dans la bande plusieurs modules de lames découpées dont la largeur correspond à la largeur L1 de la bande 200, le pas P correspondant à la plus grande longueur du connecteur rectangulaire 20.

La bande 200, après l'opération de découpe, relie entre elles les différentes lames par deux bandes, ou rives, latérales 202 et 204 dans lesquelles sont également prévus des trous d'indexation 206. Les lames sont également encore reliées entre elles dans la zone centrale de la bande par une bande de liaison supplémentaire 208.

L'étape suivante consiste à découper la bande de liaison centrale 208 puis à réaliser en un poste suivant de travail, le cambrage des extrémités libres incurvées 32 et des parties cambrées 64 et 88 des différentes lames.

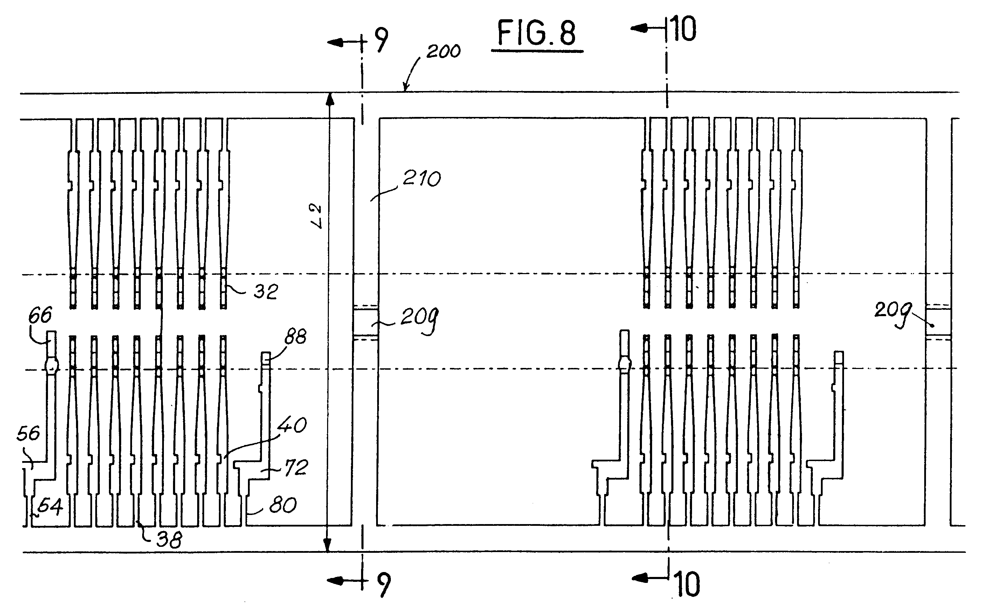

Au cours de cette même opération de cambrage on réalise un embouti 209 dans des bandes transversales de liaison 210 qui relient les bandes 204, 202 de façon à réduire la largeur de la bande depuis L1 à L2 figure 8.

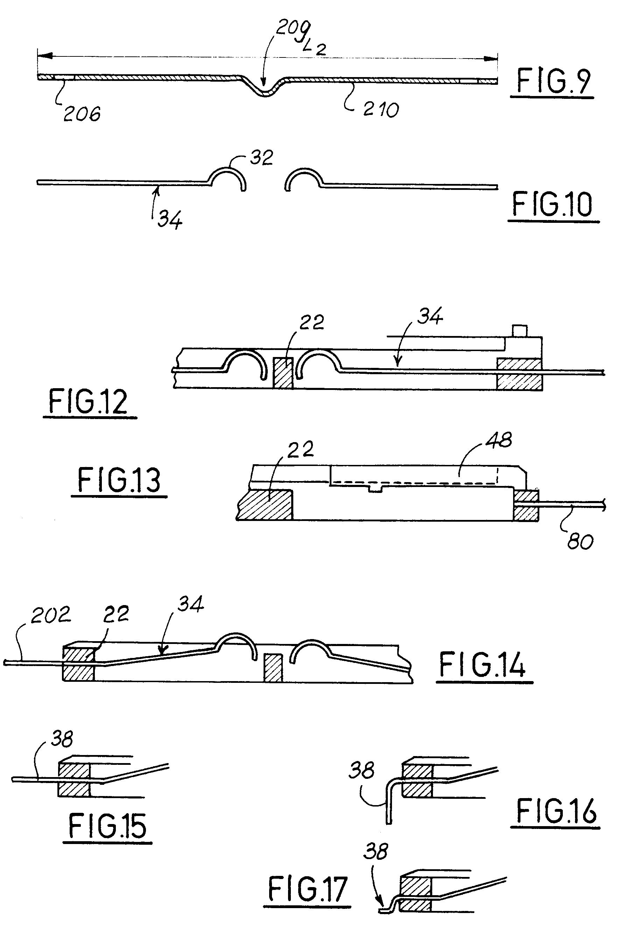

Les vues en section des figures 9 et 10 illustrent le profil de la bande transversale 210 et celui des lames de contact 34.

On a représenté par deux traits mixtes à la figure 8 la zone de la bande 200 dans laquelle est effectuée une métallisation des extrémités incurvées 32 et des parties cambrées 66 et 88 à l'aide d'un métal noble tel que par exemple de l'or ou de l'argent nécessaire à la qualité des contacts électriques.

Cette opération de métallisation en continu peut bien entendu avoir été procédée d'une opération globale de protection des lames contre la corrosion ainsi qu'être suivie par une opération de revêtement des secondes extrémités libres de raccordement 38, 54 et 80 à l'aide d'un métal facilitant, lors des opérations ultérieures d'assemblage du connecteur sur une carte de circuit imprimé, un soudage de ces extrémités de raccordement.

L'étape suivante du procédé, qui est intermédiaire entre les figures 8 et 11, consiste à replier une première fois les lames de détection 46 et de sortie 48 afin qu'elles occupent la position intermédiaire référencée en 46b et 48b à la figure 2, dans laquelle le plan général de ces deux lames est perpendiculaire au plan de la face supérieure 28 du connecteur 22 de façon à ce qu'elles soient situées au-dessus de cette dernière.

L'opération suivante consiste à surmouler le cadre support 22 sur les zones médianes de liaison des diverses lames élastiques afin d'arriver à la configuration représentée aux figures 11 à 13.

Après l'opération de surmoulage on plie une seconde fois les lames 46 et 48 de façon à ce qu'elles viennent occuper leurs positions définitives représentées aux figures 1 et 2. Cette opération doit s'effectuer avant le cambrage final des lames de contact 34 afin que celles-ci n'interfèrent pas avec les lames 46 et 48 lors de l'opération de pliage.

Après leur opération de cambrage final les lames de contact 34 possèdent le profil représenté à la figure 14.

A l'issue de cette étape de cambrage des lames 34, le procédé cesse d'être effectué en bande et l'on sépare les différents modules de connecteurs réalisés successivement.

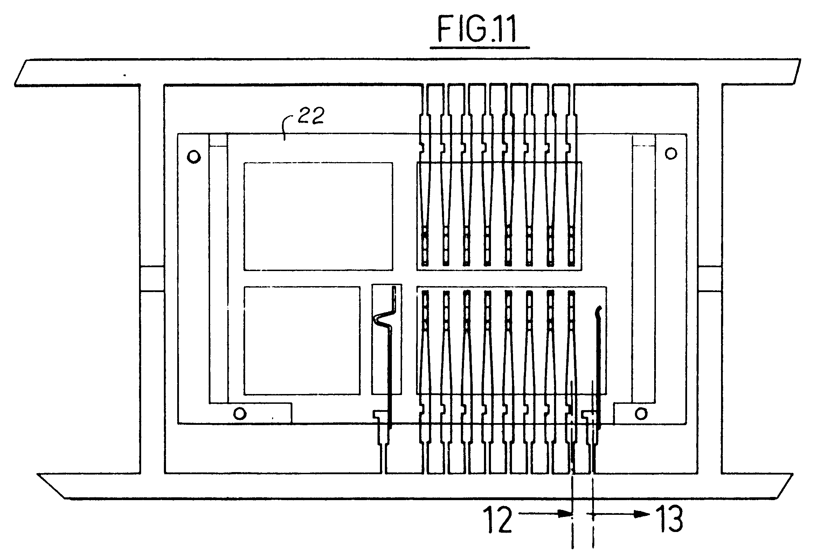

Il ne reste plus ensuite qu'à procéder à la découpe des rives latérales 202 et 204 pour arriver à la situation représentée à la figure 15. Lors d'une opération finale du procédé les secondes extrémités de raccordement 38 peuvent être simplement repliées à angle droit comme représenté à la figure 16 pour être piquées dans une carte de circuit imprimé ou coudées selon le profil de la figure 17 dans le cas où le connecteur est fixé sur un circuit imprimé selon la méthode de report à plat des composants.

## Revendications

1. Connecteur électrique (20) pour cartes à mémoire électronique du type comportant sur une de ses faces principales une pluralité de plages de contact électrique alignées parallèlement à la direction d'introduction (I) de la carte dans un dispositif de lecture-écriture et un bord transversal antérieur perpendiculaire à ladite direction d'introduction, le connecteur comportant :
- un cadre support (22) réalisé par moulage présentant une première (28) et une deuxième (30) faces planes parallèles et une pluralité de conducteurs électriques (34) en forme de lames élastiquement déformables s'étendant parallèlement à la direction d'introduction (I), chaque lame de contact comprenant une première extrémité libre incurvée de contact (32) avec l'une des plages de la carte et faisant saillie hors du plan de la première face (28), une portion médiane de liaison (40) de la lame au support (22) et une seconde extrémité libre de raccordement (38) de la lame à un circuit de traitement du dispositif de lecture écriture, chaque lame de contact s'étendant parallèlement à la direction d'introduction ;
- un micro-contact électrique (44) de détection de la position de la carte du type comportant une lame de détection (46) élastiquement déformable comprenant une première extrémité libre (52) de coopération mécanique avec le bord transversal antérieur de la carte, une portion médiane de liaison (56) de la lame au support (22) et une seconde extrémité libre de raccordement (54) de la lame de détection au circuit de traitement, la lame de détection (46) s'étendant sensiblement perpendiculairement à la direction d'introduction (I) de la carte, et un conducteur électrique de sortie (48) dont une portion coopère électriquement avec une portion en vis-à-vis de la lame de détection (46),
caractérisé en ce que :
- le conducteur électrique de sortie est une lame de sortie élastiquement déformable (48) comprenant une première extrémité libre (86) qui coopère électriquement avec ladite première extrémité libre (52) de la lame de détection (46), une portion médiane de liaison (72) de la lame de sortie (48) au support (22) et une seconde extrémité libre de raccordement (80) au circuit de traitement, la lame de sortie (48) s'étendant sensiblement perpendiculairement à la direction d'introduction (I) de la carte,
- et en ce que lesdites portions médianes de liaison (40,56,72) des lames de contact, de la lame de détection et de la lame de sortie sont surmoulées par le matériau constitutif du support (22) lors de l'opération de moulage de ce dernier.

2. Connecteur électrique selon la revendication 1, caractérisé en ce que lesdites portions médianes (56, 72) de la lame de détection (46) et de la lame de sortie (48) sont disposées chacune respectivement de part et d'autre des portions médianes (40) des lames de contact (34).

3. Connecteur électrique selon l'une des revendications 1 ou 2, caractérisé en ce que la portion médiane de liaison (56) de la lame de détection (46) s'étend dans le corps du support (22) selon une direction sensiblement parallèle auxdites faces planes (28, 30) puis se prolonge par une zone (60) repliée à 90° qui fait saillie hors de ladite première face (28), la zone repliée (60) étant reliée à un (58) des deux bords de la portion médiane de liaison parallèles à la direction d'introduction (I) de la carte, la première zone repliée (60) étant prolongée par la partie principale (50) de la lame de détection (46) qui s'étend perpendiculairement à la direction d'introduction (I) de la carte et dans un plan perpendiculaire au plan de la première face et au plan de la zone repliée (60).

4. Connecteur électrique selon l'une quelconque des revendications 1 à 3, caractérisé en ce que la portion médiane de liaison (72) de la lame de sortie (48) s'étend dans le corps du support selon une direction sensiblement parallèle auxdites faces planes (28, 30) puis se prolonge par une zone (82) repliée à 90° qui fait saillie hors de ladite première face (28), la zone repliée (82) étant reliée à un des deux bords de la portion médiane de liaison (72) parallèles à la direction d'introduction de la carte, la première zone repliée (82) étant prolongée par la partie principale (70) de la lame de sortie qui s'étend perpendiculairement à la direction d'introduction (I) de la carte et dans un plan perpendiculaire au plan de la première face (28) et au plan de la zone repliée (82).

5. Connecteur électrique selon l'une quelconque des revendications précédentes, caractérisé en ce que l'extrémité libre (52) de la lame de détection (46) possède une partie cambrée (64) dont la convexité est tournée en direction du bord transversal antérieur de la carte et qui se prolonge par une patte d'extrémité (66) sensiblement parallèle à la direction générale de la lame de détection, ladite patte (66) étant agencée en vis-à-vis d'une partie cambrée (88) formée à l'extrémité libre (86) de la lame de sortie (48) et dont la concavité est tournée vers le bord antérieur de la carte.

6. Connecteur électrique selon la revendication 5, caractérisé en ce que la convexité de la partie cambrée (88) de la lame de sortie (48) est en appui élastique contre la face de ladite patte (66) qui est tournée en direction du bord antérieur de la carte de façon à ce que cette dernière provoque l'ouverture du micro-contact (46) lorsqu'elle est en position de lecture-écriture.

7. Connecteur électrique selon l'une quelconque des revendications précédentes, caractérisé en ce que la lame de détection (46) comporte une zone élargie (65) agencée en regard du bord antérieur de la carte.

8. Connecteur électrique selon la revendication 7 prise en combinaison avec l'une des revendications 5 ou 6 caractérisé en ce que ladite zone élargie (65) est prévue dans ladite partie cambrée (64) de la lame de détection.

9. Connecteur électrique selon l'une des revendications 7 ou 8, caractérisé en ce que le support comporte un évidement (68) dans lequel peut se déplacer l'extrémité transversale correspondante de ladite zone élargie.

10. Dispositif de lecture-écriture pour cartes à mémoire électronique du type comprenant :
- un boîtier d'introduction de la carte du type comportant au moins une première pièce (100), et
- un connecteur électrique (20) selon l'une quelconque des revendications 1 à 9,
- ladite première pièce (100) étant prévue pour être montée sur ladite première face (28) du support (22) du connecteur électrique avec lequel elle coopère pour définir une fente d'introduction (102) de la carte (104), caractérisé en ce que la face interne (106) de la première pièce (100) tournée vers lesdites extrémités libres de contact (32) des lames de contact (34) possède, en section transversale, un profil de came de guidage de la carte lors de son mouvement d'introduction dans le dispositif de lecture-écriture.

11. Dispositif de lecture-écriture selon la revendication 10 caractérisé en ce que le profil de ladite came est un profil en V.

12. Dispositif de lecture-écriture selon la revendication 10 dans lequel le connecteur électrique comporte au moins deux ensembles de lames conductrices (34), les lames de deux ensembles adjacents étant parallèles entre elles, et les deux lames correspondantes de deux ensembles différents étant alignées, le sommet (110) dudit profil en V étant disposé au droit de la zone intermédiaire entre les extrémités libres de contact en vis-à-vis des lames élastiques appartenant à deux ensembles différents.

13. Procédé de réalisation d'un connecteur électrique selon l'une quelconque des revendications 1 à 9, caractérisé en ce qu'il comporte les étapes suivantes :
- a) découpe partielle dans une bande de tôle conductrice desdites lames de contact, de la lame de détection et de la lame de sortie qui s'étendent parallèlement les unes aux autres et de manière à ce qu'elles soient toutes reliées entre elles par au moins une bande transversale reliée à leursdites secondes extrémités de raccordement ;
- b1) cambrage desdites extrémités libres incurvées des lames de contact et desdites parties cambrées de la lame de détection et de la lame de sortie ;
- b2) pliage des lames de détection et de sortie ; et
- c) surmoulage dudit cadre support autour des portions médianes de liaison des lames de contact, de détection et de sortie;
et en ce qu'il comporte une étape de découpe de ladite bande transversale de liaison.

14. Procédé selon la revendication 13, caractérisé en ce que ladite étape de pliage b2 consiste à plier à 90° ladite zone pliée des lames de détection et de sortie.

15. Procédé selon l'une des revendications 13 ou 14 caractérisé en ce que ladite étape de surmoulage "c" est suivie d'une étape de :
- d) pliage des parties principales des lames de détection et de sortie de manière à ce qu'elles s'étendent dans une direction sensiblement parallèle au bord transversal antérieur de la carte.

16. Procédé selon la revendication 15 caractérisé en ce que ladite étape de pliage "d" consiste à plier d'abord la lame de détection puis la lame de sortie.

17. Procédé selon la revendication 15 ou 16 caractérisé en ce que ladite étape "d" de pliage est suivie d'une étape de :
- e) cambrage final des lames de contact de manière à ce que lesdites extrémités incurvées fassent saillie hors du plan de la première face du support.

18. Procédé selon l'une quelconque des revendications 14 à 17 caractérisé en ce que ladite étape de découpe de ladite bande transversale de liaison est effectuée au moins postérieurement à l'étape "c" de surmoulage.

## Claims

1. Electrical connector (20) for electronic memory cards of the type which have on one of their main faces a plurality of electrical contact areas aligned so as to be parallel to the direction (I) of insertion of the card into a read-write device and a front transverse edge which is perpendicular to the said insertion direction, the connector having:
- a support frame (22) produced by moulding, having first (28) and second (30) parallel flat faces and a plurality of electrical conductors (34) in the form of elastically deformable blades extending parallel to the insertion direction (I), each contact blade comprising a first curved free end (32) for contact with one of the areas on the card and projecting outside the plane of the first face (28), a middle portion (40) for joining the blade to the support (22) and a second free end (38) for connecting the blade to a processing circuit of the read-write device, each contact blade extending parallel to the insertion direction;
- an electrical microcontact (44) for detecting the position of the card, of the type having an elastically deformable detector blade (46) comprising a first free end (52) for cooperating mechanically with the front transverse edge of the card, a middle portion (56) for joining the blade to the support (22) and a second free end (54) for connecting the detector blade to the processing circuit, the detector blade (46) extending in a direction substantially perpendicular to the direction (I) of insertion of the card, and an electrical output conductor (48), one portion of which cooperates electrically with an opposite portion of the detector blade (46), characterised in that:
- the electrical output conductor is an elastically deformable output blade (48) comprising a first free end (86) which cooperates electrically with the said first free end (52) of the detector blade (46), a middle portion (72) for joining the output blade (48) to the support (22) and a second free end (80) for connection to the processing circuit, the output blade (48) extending in a direction substantially perpendicular to the direction (I) of insertion of the card,
- and in that the said middle joining portions (40, 56, 72) of the contact blades, detector blade and output blade are moulded over using the material constituting the support (22) during the operation of moulding the latter.

2. Electrical connector according to Claim 1, characterised in that the said middle portions (56, 72) of the detector blade (46) and output blade (48) are each disposed respectively on each side of the middle portions (40) of the contact blades (34).

3. Electrical connector according to either of Claims 1 or 2, characterised in that the middle joining portion (56) of the detector blade (46) extends in the body of the support (22) in a direction substantially parallel to the said flat faces (28, 30) and is then extended by an area (60) bent at 90° which projects outside the said first face (28), the bent area (60) being joined to one (58) of the two edges of the middle joining portion, which are parallel to the direction (I) of insertion of the card, the first bent area (60) being extended by the main part (50) of the detector blade (46), which extends perpendicularly to the direction (I) of insertion of the card and in a plane perpendicular to the plane of the first face and to the plane of the bent area (60).

4. Electrical connector according to any one of Claims 1 to 3, characterised in that the middle joining portion (72) of the output blade (48) extends in the body of the support in a direction substantially parallel to the said flat faces (28, 30) and is then extended by an area (82) bent at 90° which projects outside the said first face (28), the bent area (82) being connected to one of the two edges of the middle joining portion (72) which are parallel to the direction of insertion of the card, the first bent area (82) being extended by the main part (70) of the output blade which extends perpendicularly to the direction (I) of insertion of the card and in a plane perpendicular to the plane of the first face (28) and to the plane of the bent area (82).

5. Electrical connector according to any one of the preceding claims, characterised in that the free end (52) of the detector blade (46) has an arched part (64), the convex side of which is turned towards the front transverse edge of the card and which is extended by an end lug (66) substantially parallel to the general direction of the detector blade, the said lug (66) being arranged opposite an arched part (88) formed at the free end (86) of the output blade (48) and the concave side of which is turned towards the front edge of the card.

6. Electrical connector according to Claim 5, characterised in that the convex side of the arched part (88) of the output blade (48) bears elastically against the face of the said lug (66), which is turned in the direction of the front edge of the card in such a way that the latter causes the microcontact (46) to open when it is in the read-write position.

7. Electrical connector according to any one of the preceding claims, characterised in that the detector blade (46) has a widened area (65) arranged opposite the front edge of the card.

8. Electrical connector according to Claim 7 combined with either of Claims 5 or 6, characterised in that the said widened area (65) is provided in the said arched part (64) of the detector blade.

9. Electrical connector according to one of Claims 7 or 8, characterised in that the support has a recess (68) in which the corresponding transverse end of the said widened area is able to move.

10. Read-write device for electronic memory cards of the type comprising:
- a housing for the insertion of the card, of the type having at least one first piece (100), and
- an electrical connector (20) according to any one of Claims 1 to 9,
- the said first piece (100) being designed so as to be mounted on the said first face (28) of the support (22) of the electrical connector with which it cooperates to define an insertion slot (102) for the card (104), characterised in that the inside face (106) of the first piece (100) turned towards the said free contact ends (32) of the contact blades (34) has, in cross section, a cam profile for guiding the card during its insertion movement into the read-write device.

11. Read-write device according to Claim 10, characterised in that the profile of the said cam is V-shaped.

12. Read-write device according to Claim 10, in which the electrical connector has at least two sets of conductive blades (34), the blades of two adjacent sets being parallel to each other, and the two corresponding blades of two different sets being aligned, the top (110) of the said V-shaped profile being disposed in line with the intermediate area between the facing free contact ends of the elastic blades belonging to two different sets.

13. Method for producing an electrical connector according to any one of Claims 1 to 9, characterised in that it includes the following steps:
- a) partially cutting out, from a strip of conductive sheet metal, the said contact blades, detector blade and output blade which extend parallel to each other and in such a way that they are all joined to each other by at least one transverse strip joined to their said second connecting ends;
- b1) arching the said curved free ends of the contact blades and the said arched parts of the detector blade and output blade;
- b2) folding the detector and output blades; and
- c) moulding the said support frame about the middle joining portions of the contact, detector and output blades;
and in that it includes a step consisting of the cutting of the said transverse joining strip.

14. Method according to Claim 13, characterised in that the said folding step b2 consists in folding the said folded area of the detector and output blades at an angle of 90°.

15. Method according to one of Claims 13 or 14, characterised in that the said moulding step "c" is followed by a step consisting of:
- d) folding the main parts of the detector and output blades in such a way that they extend in a direction substantially parallel to the front transverse edge of the card.

16. Method according to Claim 15, characterised in that the said folding step "d" consists of folding first the detector blade and then the output blade.

17. Method according to Claim 15 or 16, characterised in that the said folding step "d" is followed by a step consisting of:
- e) the final arching of the contact blades in such a way that the said curved ends project outside the plane of the first face of the support.

18. Method according to any one of Claims 14 to 17, characterised in that the said step consisting of cutting the said transverse joining strip is carried out at least after the moulding stage "c".

## Patentansprüche

1. Elektrischer Verbinder (20) für elektronische Speicherkarten, mit einer Vielzahl elektrischer Kontaktstellen auf einer seiner Hauptseiten, die parallel zur Einführrichtung (I) der Karte in eine Lese-Schreib-Vorrichtung ausgerichtet sind, und mit einem zur Einführrichtung senkrechten, querverlaufenden Vorderrand, und mit:
- einem durch Formen hergestellten Trägerrahmen (22), der eine erste (28) und eine zweite (30) ebene, parallele Fläche und eine Vielzahl elektrischer Leiter (34) in Form von federnd verformbaren Kontaktzungen aufweist, die sich parallel zur Einführrichtung (I) erstrecken, wobei jede Kontaktzunge ein erstes freies, gebogenes Ende (32) des Kontaktes mit einer der Kontaktstellen der Karte aufweist, das über die Ebene der ersten Fläche (28) übersteht, einem mittleren Verbindungsabschnitt (40) für die Verbindung der Zungen mit dem Träger (22) und einem zweiten freien Anschlußende (38), um die Zunge mit einer Auswertungsschaltung der Lese-Schreib-Vorrichtung zu verbinden, wobei sich jede Kontaktzunge parallel zur Einführungsrichtung erstreckt;
- einem elektrischen Mikrokontakt (44) zur Lageerkennung der Karte, mit einer federnd verformbaren Registrierzunge (46), die ein erstes freies Ende (52) zum mechanischen Zusammenwirken mit dem querverlaufenden Vorderrand der Karte besitzt, einem mittleren Verbindungsabschnitt (56) für die Verbindung der Zunge mit dem Träger (22) und einem zweiten freien Anschlußende (54) zum Verbinden der Registrierzunge mit der Auswertungsschaltung, wobei sich die Registrierzunge (46) ungefähr senkrecht zur Einführrichtung (I) der Karte erstreckt, und einem elektrischen Ausgangsleiter (48), von dem ein Abschnitt mit einem gegenüberliegenden Abschnitt der Registrierzunge (46) elektrisch zusammenwirkt,
dadurch gekennzeichnet,
- daß der elektrische Ausgangsleiter eine federnd verformbare Ausgangszunge (48) ist, die ein erstes freies Ende (86) aufweist, das mit dem ersten freien Ende (52) der Registrierzunge (46), einem mittleren Abschnitt (72) für die Verbindung der Ausgangszunge (48) mit dem Träger (22) und einem zweiten freien Anschlußende (80) zum Verbinden mit der Auswertungsschaltung elektrisch zusammenwirkt, wobei sich die Ausgangszunge (48) ungefähr senkrecht zur Einführrichtung (I) der Karte erstreckt,
- und daß die mittleren Verbindungsabschnitte (40, 56, 72) der Kontaktzungen, der Registrierzunge und der Ausgangszunge in das den Träger (22) bildende Material beim Formen des letzteren eingegossen wurden.

2. Elektrischer Verbinder nach Anspruch 1, dadurch gekennzeichnet, daß jeweils jeder der mittleren Abschnitte (56, 72) der Registrierzunge (46) und der Ausgangszunge (48) beiderseits der mittleren Abschnitte (40) der Kontaktzungen (34) angeordnet sind.

3. Elektrischer Verbinder nach einem der Ansprüche 1 oder 2, dadurch gekennzeichnet, daß der mittlere Verbindungsabschnitt (56) der Registrierzunge (46) sich in einer zu den ebenen Flächen (28, 30) ungefähr parallelen Richtung in den Körper des Trägers (22) erstreckt , dann sich mit einem um 90° gebogenen Bereich (60) fortsetzt, der über die erste Fläche (28) übersteht, wobei der gebogene Bereich (60) mit einem (58) der beiden Ränder des mittleren, zur Einführrichtung (I) der Karte parallelen Verbindungsabschnitts verbunden ist und der erste gebogene Bereich (60) um den Hauptteil (50) der Registrierzunge (46) verlängert ist, die sich senkrecht zur Einführrichtung (I) der Karte und in einer zur Ebene der ersten Fläche und zur Ebene des gebogenen Bereichs (60) senkrechten Ebene erstreckt.

4. Elektrischer Verbinder nach einem der Ansprüche 1 bis 3, dadurch gekennzeichnet, daß der mittlere Verbindungsabschnitt (72) der Ausgangszunge (48) sich in einer zu den ebenen Flächen (28, 30) ungefähr parallelen Richtung in den Körper des Trägers erstreckt, sich dann um einen um 90° gebogenen Bereich (82), der über die erste Fläche (28) übersteht, fortsetzt, wobei der gebogene Bereich (82) mit einem der beiden zur Einführrichtung der Karte parallelen Rändern des mittleren Verbindungsabschnitts (72) verbunden ist und der erste gebogene Bereich (82) durch den Hauptteil (70) der Ausgangszunge verlängert ist, der sich senkrecht zur Einführrichtung (I) der Karte und in einer zur Ebene der ersten Fläche (28) senkrechten Ebene und in der Ebene des gebogenen Bereichs (82) erstreckt.

5. Elektrischer Verbinder nach einem der vorhergehenden Ansprüche, dadurch gekennzeichnet, daß das freie Ende (52) der Registrierzunge (46) einen gebogenen Teil (64) besitzt, dessen Wölbung in Richtung zum querverlaufenden Vorderrand der Karte weist und der sich in einem zur Hauptrichtung der Registrierzunge ungefähr parallelen Endlappen (66) fortsetzt, wobei der Lappen (66) gegenüber einem gebogenen Teil (88) angeordnet ist, der am freien Ende (86) der Ausgangszunge (48) ausgebildet ist und dessen Vertiefung zum Vorderrand der Karte weist.

6. Elektrischer Verbinder nach Anspruch 5, dadurch gekennzeichnet, daß die Wölbung des gebogenen Teils (88) der Ausgangszunge (48) federnd an der Seite des Lappens (66) anliegt, die in Richtung zum Kartenvorderrand weist, so daß dieser letztere das Öffnen des Mikrokontakts (44) bewirkt, wenn sie in der Lese-Schreibstellung ist.

7. Elektrischer Verbinder nach einem der vorhergehenden Ansprüche, dadurch gekennzeichnet, daß die Registrierzunge (46) einen vergrößerten, dem Kartenvorderrand gegenüberliegend angeordneten Bereich (65) aufweist.

8. Elektrischer Verbinder nach Anspruch 7, in Verbindung mit einem der Ansprüche 5 oder 6, dadurch gekennzeichnet, daß der vergrößerte Bereich (65) in dem gebogenen Teil (64) der Registrierzunge vorgesehen ist.

9. Elektrischer Verbinder nach einem der Ansprüche 7 oder 8, dadurch gekennzeichnet, daß der Träger eine Ausnehmung (68) aufweist, in der das dem vergrößerten Bereich entsprechende querverlaufende Ende verschiebbar ist.

10. Lese-Schreib-Vorrichtung für elektronische Speicherkarten mit:
- einem Gehäuse zum Einführen der Karte mit wenigstens einem ersten Teil (100) und
- einem elektrischen Verbinder (20) nach einem der Ansprüche 1 bis 9,
- wobei das erste Teil (100) dazu vorgesehen ist, auf der ersten Fläche (28) des Trägers (22) des elektrischen Verbinders, mit dem es zusammenwirkt, angeordnet zu werden, um einen Einführungsschlitz (102) für die Karte (104) zu bilden, dadurch gekennzeichnet, daß die zu den freien Kontaktenden (32) der Kontaktzungen (34) weisende Innenfläche (106) des ersten Teils (100) im Querschnitt ein Nockenprofil zur Kartenführung bei deren Einführungsbewegung in die Lese-Schreib-Vorrichtung besitzt.

11. Lese-Schreib-Vorrichtung nach Anspruch 10, dadurch gekennzeichnet, daß das Nockenprofil ein V-förmiges Profil ist.

12. Lese-Schreib-Vorrichtung nach Anspruch 10, bei der der elektrische Verbinder wenigstens zwei Gruppen von Leiterzungen (34) aufweist, wobei die Zungen zweier nebeneinander angeordneter Gruppen zueinander parallel sind und die beiden einander entsprechenden Zungen zweier verschiedener Gruppen sich in einer Reihe befinden und die Spitze (110) des V-förmigen Profils im rechten Winkel zum Zwischenbereich zwischen den sich gegenüberliegenden freien Kontaktenden der zu zwei verschiedenen Gruppen gehörenden federnden Zungen angeordnet ist.

13. Verfahren zur Herstellung eines elektrischen Verbinders nach einem der Ansprüche 1 bis 9, dadurch gekennzeichnet, daß es die folgenden Schritte aufweist:
- a) teilweises Ausstanzen der Kontaktzungen, der Registrierzunge und der Ausgangszunge aus einem Leiterblechstreifen, welche Zungen sich parallel zueinander erstrecken, und zwar derart, daß sie alle miteinander durch mindestens einen querverlaufenden Streifen verbunden sind, der mit ihren zweiten Anschlußenden verbunden ist;
- b1) Biegen der freien gebogenen Enden der Kontaktzungen und der gebogenen Teile der Registrierzunge und der Ausgangszunge;
- b2) Biegen der Registrier- und Ausgangszungen; und
- c) Eingießen der mittleren Verbindungsabschnitte der Kontakt-, der Registrier- und Ausgangszungen in den Trägerrahmen;
und daß es einen Schritt zum Abschneiden des querverlaufenden Verbindungstreifens aufweist.

14. Verfahren nach Anspruch 13, dadurch gekennzeichnet, daß der Biege-Schritt "b2" darin besteht, den gebogenen Bereich der Registrier- und Ausgangszungen um 90° zu biegen.

15. Verfahren nach einem der Ansprüche 13 oder 14, dadurch gekennzeichnet, daß dem Schritt "c" des Eingießens ein Schritt folgt zum:
- d) Biegen der Hauptteile der Registrier- und Ausgangszungen, damit sie sich in eine ungefähr parallele Richtung zum vorderen Querrand der Karte erstrecken.

16. Verfahren nach Anspruch 15, dadurch gekennzeichnet, daß der Biege-Schritt "d" darin besteht, zuerst die Registrierzunge und dann die Ausgangszunge zu biegen.

17. Verfahren nach Anspruch 15 oder 16, dadurch gekennzeichnet, daß dem Biege-Schritt "d" ein Schritt folgt zum:
- e) letzten Biegen der Kontaktzungen, damit die gebogenen Enden über die Ebene der ersten Fläche des Trägers überstehen.

18. Verfahren nach einem der Ansprüche 14 bis 17, dadurch gekennzeichnet, daß der Schritt zum Abschneiden des querverlaufenden Verbindungstreifens wenigstens nach dem Schritt "c" des Eingießens stattfindet.
